# NEUE EUROPÄISCHE PATENTSCHRIFT

(11) **EP 1 687 751 B2**
(45) Veröffentlichungstag und Bekanntmachung des Hinweises auf die Entscheidung über den Einspruch: **13.07.2011**
(45) Hinweis auf die Patenterteilung: 23.01.2008
(21) Anmeldenummer: 04802828.6
(22) Anmeldetag: 25.11.2004
(51) Int. Cl.: G06K 7/00

(54) **CHIPKARTENLESEVORRICHTUNG UND EINE CHIPKARTE ZUM BETREIBEN AN EINER DERARTIGEN LESEVORRICHTUNG**
CHIP CARD READER AND A CHIP CARD FOR USE IN A READER OF THIS TYPE
LECTEUR DE CARTE A PUCE ET CARTE A PUCE UTILISABLE DANS UN TEL LECTEUR

(30) Priorität: 25.11.2003 DE 10354935
(43) Veröffentlichungstag der Anmeldung: 09.08.2006
(73) Patentinhaber: Infineon Technologies AG, 85579 Neubiberg (DE)
(72) Erfinder: CINKLER, Kalman, 80639 München (DE); RÜPING, Stefan, 84435 Lengdorf (DE)
(74) Vertreter: Stöckeler, Ferdinand
(86) Internationale Anmeldenummer: PCT/DE2004/002619
(87) Internationale Veröffentlichungsnummer: WO 2005/052845

(56) Entgegenhaltungen:
- WO-A-01/06443
- DE-U1- 9 100 861

## Beschreibung

Die Erfindung betrifft eine Chipkartenlesevorrichtung.

Im Bereich der Chipkarte hat sich eine Schnittstellenstandardisierung gemäß ISO 7816 für kontaktbehaftete Chipkarten und die damit korrespondierende ISO/IEC 10536 für kontaktlose Chipkarten weltweit durchgesetzt. Obwohl es technisch heutzutage möglich wäre, sind Chipkarten, auf denen mehrere Anwendungen gleichzeitig implementiert sind, nicht weit verbreitet. Dies liegt daran, daß ungeklärt bleibt, wer für die Karte und die im Chip gespeicherten Inhalte letztendlich die Verantwortung trägt. In der DE 91 00 861 U1 ist solch eine Chipkarte beschrieben, die zwei Mikroprozessoren umfasst, wobei der eine Mikroprozessor nach dem ISO-Standard kommuniziert und der andere Mikroprozessor nach einem weiteren Standard kommuniziert.

Somit ist die Krankenkassenkarte, die ebenfalls als Geldkarte arbeitet, zwar technisch realisierbar, läßt sich aber am Markt noch nicht durchsetzen. Vielmehr sind jedoch Anwendungen denkbar, bei denen mehrere Applikationen gleichzeitig parallele betrieben werden sollen. Hierzu ist es notwendig, mehrere Chipkarten, kontaktbehaftet oder kontaktlos, gleichzeitig an einem Lesegerät zu betreiben. Gemäß dem ISO-Standard ist jedoch nur jeweils eine einzige Karte an einer Schnittstelle betreibbar.

In der WO 01/006443 A1 ist eine Anordnung mit einer Chipkartenlesevorrichtung beschrieben, die unterscheidet, ob die zu lesende Chipkarte dem ISO-Standard oder dem NRSS-Standard entspricht und eine entsprechende Schnittstellen bereitstellt.

Demzufolge liegt der Erfindung die Aufgabe zugrunde, eine Chipkartenlesevorrichtung vorzusehen, bei der bei Beibehaltung einer Kompatibilität zu dem bisherigen ISO-Standard mehrere Chipkarten gleichzeitig betreibbar sind.

Diese Aufgabe wird erfindungsgemäß mit den in dem unabhängigen Patentanspruch angegebenen Maßnahmen gelöst.

Dadurch, daß die Chipkartenlesevorrichtung neben einer ersten Kommunikationseinrichtung zum Kommunizieren gemäß ISO-Standard eine zweite Kommunikationseinrichtung aufweist, um mit zumindest einer weiteren Karte gemäß einem Standard zu kommunizieren, kann an einer derartigen Chipkartenlesevorrichtung ohne Verletzung des ISO-Standards eine Chipkarte gemäß dem ISO-Standard und weitere Chipkarten gemäß eines anderen Standards betrieben werden.

Weitere vorteilhafte Ausführungen sind in den untergeordneten Patentanspruch angegeben.

Nachfolgend wird die Erfindung unter Bezugnahme auf die Zeichnung im Einzelnen erläutert.
- Figur 1: zeigt symbolisch die Kontaktfeldanordnung von ISO-Chipkartenkontakten,
- Figur 2: zeigt ein Ausführungsbeispiel der erfindungsgemäßen Anordnung.

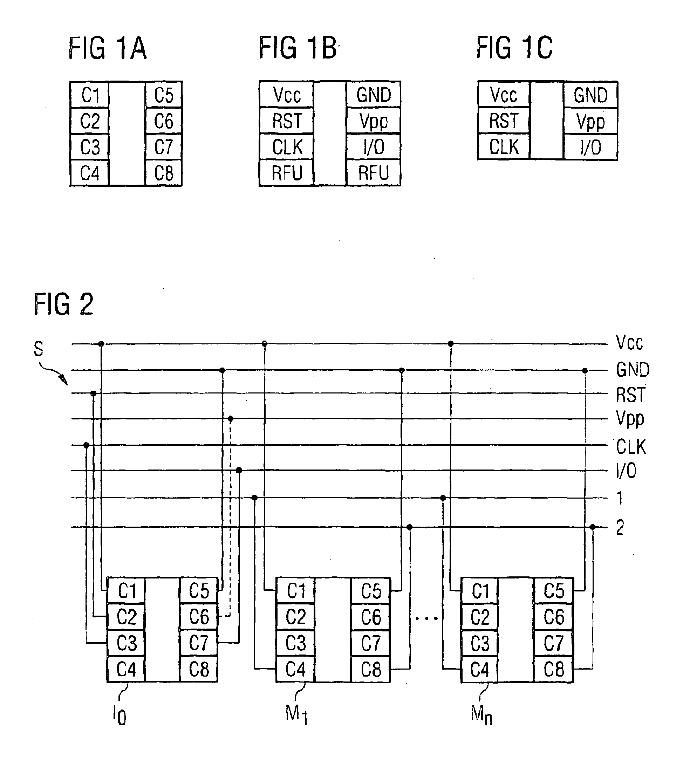

Figur 1a zeigt ein acht-kontaktiges Chipkarten-Kontaktflächenfeld, wobei die einzelnen Kontaktflächen mit C1 bis C8 bezeichnet sind. Gemäß dem ISO-Standard sind die einzelnen Kontaktflächen, wie in Figur 1b dargestellt, derart belegt, daß C1 für ein Betriebsspannungspotential VCC, C2 für ein Reset-Signal RST, C3 für ein Takt-Signal CLK, C5 für ein MassePotential GND, C6 für ein Programmierspannungs-Potential VPP und C7 für ein Daten-Signal (I/O) vorgesehen ist. Die Kontaktflächen C4 und C8 besitzen dagegen gemäß ISO-Standard keine Funktion.

Die Funktion eines acht-kontaktigen Kontaktflächenfeldes gemäß ISO-Standard gemäß Figur 1b entspricht dem in Figur 1c dargestellten Kontaktflächenfeld für sechs Kontakte nach dem ISO-Standard.

In Figur 2 ist der wesentliche Teil einer erfindungsgemäßen Chipkartenlesevorrichtung dargestellt. Dabei ist eine Schnittstelle S mit Kontakten C1, C2,...,C7, C8 verbunden. Die Schnittstelle S weist dabei Anschlußleitungen für ein Versorgungsspannungspotential VCC, Massepotential GND, ein Reset-Signal RST, ein Programmierspannungspotential VPP, ein Takt-Signal CLK und ein Datensignal I/O für die Kommunikation nach dem ISO-Standard auf. Weiterhin ist eine erste Anschlußleitung 1 und eine zweite Anschlußleitung 2 für eine Kommunikation gemäß eines zweiten Schnittstellenstandards vorgesehen.

Gemäß der Darstellung in Figur 2 ist nunmehr eine Chipkarten-Kontaktfeldanordnung Io nach dem ISO-Standard mit der Schnittstelle S derart verbunden, daß der Kontakt C1 mit der Anschlußleitung für das Versorgungsspannungs-Potential VCC, der Kontakt C5 mit der Anschlußleitung für das Massepotential GND, der Kontakt C2 mit der Anschlußleitung für das Reset-Signal RST, der Kontakt C3 mit der Anschlußleitung für das Takt-Signal CLK und der Kontakt C7 mit der Anschlußleitung für das Datensignal I/O verbunden ist. Die mechanische Verbindung erfolgt dabei, wie dies mit Chipkarten nach dem ISO-Standard üblich ist.

In vielen Anwendungen ist es heutzutage nicht mehr notwendig, eine Programmierspannung vom Kartenterminal zur Chipkarte zu übertragen. Aus diesem Grund ist die Verbindung zwischen dem Kontakt C6 und der Anschlußleitung für das Programmierspannungs-Potential VPP gestrichelt und damit optional dargestellt.

In dem in Figur 2 dargestellten Ausführungsbeispiel sind nunmehr weitere Chipkarten mit ihren Kontaktfeldern M1 bis Mn mit der Schnittstelle S der Chipkartenlesevorrichtung verbunden.

Dabei sind die Kontakte C1 und C5 ebenfalls jeweils mit den Anschlußleitungen für das Betriebsspannungspotential VCC und das Massepotential GND der Schnittstelle S verbunden. In Abweichung zur ISO-Karte sind dagegen die Kontakte C4 und C8 mit den zusätzlichen Anschlußleitungen 1 und 2 für einen zweiten Schnittstellenstandard verbunden. Über diese Anschlußleitungen 1 und 2 und die Kontakte C4 und C8 kann nunmehr ein Datenaustausch gemäß eines zweiten Standards erfolgen. Um die Nutzung der Anschlußleitungen 1 und 2 von mehreren Karten gleichzeitig zu ermöglichen, benötigt man ein Datenaustauschverfahren, das ein sogenanntes Media Access Control/Management (MAC/M) beinhaltet. Bei so einem Standard ist es erlaubt, daß mehrere Einheiten parallel an der Schnittstelle liegen da sie dank MAC/M kollisionsfrei kommunizieren können. Auf diese Art und Weise ist sichergestellt, daß die Schnittstelle auch immer mit einer Karte nach dem ISO-Standard verbunden sein kann und gleichzeitig weitere Karten anschließbar sind. Es findet keinerlei Kollision mit dem ISO-Standard statt, der einen Parallelbetrieb mehrerer Karten untersagt.

Für den Fall, daß versehentlich mehrere Karten nach dem ISO-Standard angeschlossen werden, ist dies auch nicht schädlich. Es sind üblicherweise an den Kontaktanschlüssen der Chipkarte nach dem ISO-Standard sogenannte Pull-Up-Widerstände vorgesehen. Es würde lediglich kein Betrieb mit diesen Karten erfolgen. Unbeschadet davon wäre trotzdem stets eine Kommunikation mit den Karten M1 bis Mn möglich, die mit ihren Kontakten C4, C8 mit den Leitungen 1 und 2 der Schnittstelle S verbunden sind.

In ähnlicher Weise kann auch mit Karten, die kontaktlos arbeiten, verfahren werden. Hier wäre es sodann möglich, daß beispielsweise in einer Weiterbildung vorgesehen ist, daß die Chipkarte Io, die nach dem ISO-Standard betrieben wird, kontaktbehaftet mit der Schnittstelle S verbunden ist. Die Karten M1 bis Mn, die nach einem anderen Standard arbeiten, würden dagegen beispielsweise kontaktlos mit der Chipkartenlesevorrichtung kommunizieren. Dies erfordert eine kontaktlose Verbindung mit den Schnittstellenleitungen 1 und 2 der Schnittstelle S.

Entsprechend kann dies auch grundsätzlich für alle Karten, sowohl für die, die Karten nach dem ISO-Standard kommunizierren (ISO/IEC 10536), als auch den Karten,die nach einem anderen Standard kommunizieren, in kontaktloser Weise erfolgen.

## Patentansprüche

1. Chipkartenlesevorrichtung mit
- einer Betriebsspannungsversorgungseinrichtung (VCC, GND) zum Versorgen von Chipkarten mit einer Betriebsspannung,
- einer ersten Kommunikationseinrichtung, um mit einer Chipkarte (I₀) gemäß ISO-Standard zu kommunizieren,
- einer zweiten Kommunikationseinrichtung, um mit zumindest einer weiteren Chipkarte (M1...Mn) gemäß einem anderen, vom ISO-Standard verschiedenen Standard zu kommunizieren, **gekennzeichnet durch**
- eine Schnittstelle (S) für die Verbindung von der Chipkarte (I₀) nach dem ISO-Standard und gleichzeitig der mindestens einen weiteren Chipkarte (M1...Mn) nach dem anderen, vom ISO-Standard verschiedenen Standard, wobei die Schnittstelle (S) Anschlussleitungen (Vcc, GND, RST, Vpp, CLK, I/0) für das Betreiben der Chipkarte nach dem ISO-Standard sowie zwei zusätzliche Anschlussleitungen (1,2) aufweist, und
wobei die Anschlussleitungen (Vcc, GND, RST, Vpp, CLK, I/0) für die ISO-Kontakte C1, C2, C3, C5 und C7 vorgesehen sind, **durch** die die Chipkarte (I₀) nach dem ISO-Standard betreibbar ist, und wobei die zwei zusätzlichen Anschlussleitungen (1,2) für die ISO-Kontakte C4 und C8 vorgesehen sind und die weitere Chipkarte (M1...Mn) **durch** die ISO-Kontakte C1, C4, C5 und C8 gleichzeitig betreibbar ist, oder wobei die zwei zusätzlichen Anschlussleitungen (1,2) für eine gleichzeitige kontaktlose Kommunikation mit der weiteren Chipkarte (M1...Mn) nach dem anderen, vom ISO-Standard verschiedenen Standard vorgesehen sind.

2. Chipkartenlesevorrichtung nach Anspruch 1,
**dadurch gekennzeichnet, dass** die Betriebsspannungsversorgungseinrichtung Anschlußleitungen für ISO-Kontakte C1 und C5 aufweist.

## Claims

1. Smart card reader comprising:
- an operating voltage supply device (VCC, GND) for supplying smart cards with an operating voltage,
- a first communication device in order to communicate with a smart card (I₀) in accordance with an ISO standard,
- a second communication device in order to communicate with at least one further smart card (M1...Mn) in accordance with another standard, different from the ISO standard, **characterized by**
- an interface (S) for the connection of the smart card (I₀) according to the ISO standard and simultaneously the at least one further smart card (M1...Mn) according to the other standard different from the ISO standard, the interface (S) having connecting lines (Vcc, GND, RST, Vpp, CLK, I/O) for the operation of the smart card according to the ISO standard and also two additional connecting lines (1, 2) and
the connecting lines (Vcc, GND, RST, Vpp, CLK, I/O) being provided for the ISO contacts C1, C2, C3, C5 and C7, by means of which it is possible to operate the smart card (I₀) according to the ISO standard, and the two additional connecting lines (1, 2) being provided for the ISO contacts C4 and C8 and the further smart card (M1...Mn) being able to be operated simultaneously by the ISO contacts C1, C4, C5 and C8, or the two additional connecting lines (1, 2) being provided for a simultaneous contactless communication with the further smart card (M1...Mn) according to the other standard different from the ISO standard.

2. Smart card reader according to claim 1,
**characterized in that** the operating voltage supply device has connecting lines for ISO contacts C1 and C5.

## Revendications

1. Dispositif de lecture de cartes à puce comportant,
- un dispositif d'alimentation en tension de fonctionnement (VCC, GND) pour appliquer une tension de fonctionnement à des cartes à puce,
- un premier dispositif de communication pour communiquer avec une carte à puce (Io) de la norme ISO,
- un deuxième dispositif de communication pour communiquer avec au moins une autre carte à puce (M1 ...Mn) d'une autre norme différente de la norme ISO,
**caractérisé par**
- une interface (S) pour relier la carte à puce (Io) de la norme ISO et en même temps l'au moins une autre carte à puce (M1 ...Mn) de l'autre norme différente de la norme ISO, l'interface (S), l'interface (S) comportant des lignes de connexion (VCC, GND, RT, VPP, CLK, I/O) pour faire fonctionner la carte à puce suivant la norme ISO ainsi que deux lignes de connexion supplémentaires (1,2), et
les lignes de connexion (VCC, GND, RT, VPP, CLK, I/O) étant prévues pour les contacts ISO C1, C2, C3, C5 et C7 par lesquels la carte à puce peut fonctionner suivant la norme ISO, et les deux linges de connexion supplémentaires (1, 2) étant prévues pour les contacts ISO C4 et C8 et l'autre carte à puce (M1 ...Mn) pouvant fonctionner simultanément par le biais des contacts ISO C1, C4, C5 et C8, ou les deux lignes de connexion supplémentaires (1, 2) étant prévues pour une communication simultanée sans contact avec l'autre carte à puce (M1 ...Mn) de l'autre norme différente de la norme ISO.

2. Dispositif de lecture de cartes à puce selon la revendication 1, **caractérisé en ce que** le dispositif d' alimentation en tension de fonctionnement comporte des lignes de connexion destinées à des contacts ISO C1, C5.
